# EUROPEAN PATENT APPLICATION

(11) **EP 4 567 005 A1**
(43) Date of publication of application: **11.06.2025**
(21) Application number: 22953395.5
(22) Date of filing: 02.08.2022
(51) Int. Cl.: C02F 3/00, C02F 3/02, C02F 3/06

(54) **DEVICE FOR FILTERING AND PURIFYING GREYWATER OR OTHER WASTEWATER TO GENERATE A NEW, CLEAN AND SAFE WATER SOURCE BY MEANS OF A BIOLOGICAL FILTER**

(71) Applicant: Yaku SpA, Las Condes, Santiago (CL); Pontificia Universidad Católica de Chile, Santiago (CL)
(72) Inventor: VELOSO GIMÉNEZ, Valentina del Carmen, La Florida Santiago (CL); CÁRDENAS CALDERÓN, Camila Valentina, La Florida Santiago (CL); SERRANO CANALES, Alejandra Rita de Lourdes, La Florida Santiago (CL); MUÑOZ SILVA, Macarena Andrea, Santiago Santiago (CL); VARGAS CUCURELLA, Ignacio Tomás, Peñalolén Santiago (CL)
(74) Representative: Pons
(86) International application number: PCT/CL2022/050078
(87) International publication number: WO 2024/026577

(57) **Abstract**

A device (1) for the filtration and purification of wastewater, such as grey water, aimed at providing a new clean and safe water source, comprising: a tank (2) for collecting the water to be treated, comprising an inlet or opening (5) for routing the water to be treated and for discharging the water once filtered and purified; a biocarrier container (3), placed inside the tank (2), comprising a plurality of biocarriers containing grown microorganisms, which purify the water; an aeration unit configured to supply oxygen inside the tank in order to promote the aerobic metabolism of the microorganisms and to prevent the appearance of bad odors; and a biocarrier for the growth of microorganisms for the filtration and purification of wastewater.

## Description

### TECHNICAL FIELD

The present invention is related to the water reuse industry, specifically, it refers to a device for the reuse of wastewater, such as gray water, which aimed at providing a new water source in places with water shortage or deficit, thus reducing water consumption.

### BACKGROUND OF THE INVENTION

The water crisis is a growing and global problem. It is projected that by 2030 there will be a 40% water deficit worldwide. Particularly, Chile is one of the most heavily impacted countries, as 72% of the territory is affected by drought and more than 1 million Chileans do not have access to water. This scenario requires action, so it is urgent to find new water sources. An attractive alternative is the reuse of wastewater produced by human activity. Between 40-75% of the total water consumed per capita corresponds to wastewater, mainly gray water used in showers, sinks and washing machines. Although the low level of wastewater contamination or graywater allows it to be reused, in practice it is almost entirely wasted due to the lack of sustainable, efficient, simple and affordable technologies that can be implemented locally or purchased by customers.

Among the solutions available in the state of the art, one can cite document CL200803104 which describes a grey water regeneration system, which is entirely controlled by a plc, and which comprises; a primary tank, a secondary tank having an aerator, a membrane and a suction pump, and a tertiary tank for chlorine dosing, where the three tanks are connected to a general collector. This solution has the disadvantage that the water is treated sequentially in different tanks and not only in one, where microorganisms are not used in substrates such as biofilter to metabolize the contaminants in the gray water for water filtration and purification.

Another document that can be considered is US20150191365 which describes a grey water recovery and reuse system comprising a body for collecting, conditioning and discharging grey water, comprising an inlet connected to a grey water source; a solids filter for the grey water, positioned at the inlet of the body; a waste outlet adjacent to and under the filter aimed at removing such solids; a pond to receive the filtered graywater; a disinfectant to disinfect the filtered graywater; a pump to discharge the conditioned graywater from the pond; a discharge connection to the sewerage system; a connection to a fresh water source; and a control system aimed at controlling the operation of the system. In this case, the system allows treating the water in a single body or pond; however, it does not use microorganisms in substrates that allow metabolizing the contaminants in the gray water, where the substrates are constantly agitated by means of an aeration device that favors the interaction between the microorganisms and the water to be filtered.

Another document that can be cited, is document US4196082 which describes an integrated domestic wastewater disposal and a water purification system comprising: a dry toilet; a main waste composting pond; a sludge settling pond with a top/bottom section; a biofilter whereby the water to be purified circulates; piping means for removing water from the settling pond to be sent to the biofilter; piping means for removing sludge from the settling pond to be sent to the main pond; piping means for feeding grey water from the toilet to mechanical purification means for filtering the water; piping array to mechanically supply purified water from such mechanical purifying means to the sludge settling tank; and a common suction fan to circulate air in both the toilet and the biofilter. Although this system describes the use of biofilters for water treatment, this solution has the disadvantage that the water is treated sequentially in different tanks and not just in one, which makes the system difficult to be implemented.

Furthermore, in the state of the art there are different substrates for microorganisms, specifically, biocarriers or water purification carriers. For instance, document US20070102354 describes a support medium for biological growth, comprising a tubular cross section, and a perturbed outer perimeter that provides a protected outer surface to sustain biological growth, wherein said perturbed perimeter can facilitate the mixing of the medium.

Accordingly, none of the above documents discloses a device for wastewater filtration and purification, such as greywater, which allows reusing such water with an efficient, simple and affordable configuration to be implemented locally or by a family, up to large volumes of water, using a plurality of biocarriers aimed at maximizing the contact between the water to be treated and the microorganisms on the substrates and thus improve the oxygen transfer to such microorganisms, which promotes their aerobic metabolism and, consequently, improves water purification process. None of said documents disclose carriers or biocarriers featuring a configuration of cavities and blades aimed at encouraging microorganisms growth and to ensure hydrodynamic performance for the interaction between the biocarrier and the water.

### SUMMARY OF THE INVENTION

The invention relates to an integrated device for the filtration and purification of wastewater, such as gray water, which allows the reuse of such water thus generating a new water source. The device allows the revaluation as a resource of wastewater, such as gray water, which is generally wasted, thus generating a new, clean and safe water source, which allows the saving of water consumption. This is of particular relevance in places with drought, water shortage or water deficit.

Another objective of the invention is to provide a device that allows wastewater treatment, such as gray water, in a sustainable manner and free of toxic by-products.

Another objective of the invention is to provide a water source that allows the regeneration of green areas and crops that have been affected by the lack of available water.

In specific, the device consists of a biological filter that uses a biofilter containing microorganisms, established on substrates, capable of removing pollutants and/or impurities from wastewater, such as gray water. The design of the substrates used in the device improves its hydrodynamic behavior, achieving a greater interaction with water and air that maximizes the contact between the water to be treated and the microorganisms on the substrates and improves the transfer of oxygen to these microorganisms, allowing to favor their aerobic metabolism and, consequently, improves the purification process of wastewater, particularly gray water.

The device treats water, thus allowing 100% of the water to be reused for irrigation, toilet flushing and/or industrial uses, reducing on average between 40-70% of water consumption, providing economic and water savings. It is an effective, compact, sustainable technology, easy to operate, with low maintenance, low cost compared to other biological technologies and affordable for people.

The device is designed to be used by a wide range of users for local or single-family implementation up to large volumes of water, such as urban or rural families, farmers, companies that want to reduce water consumption, institutions and construction/real estate/industrial companies, or any consumer interested in reducing their water footprint.

The integrated device for reusing wastewater, such as gray water, that allows to obtain a new water source is a biological filtering device, comprising a tank for collecting the water to be treated; a biocarrier container comprising a plurality of biocarriers containing the grown microorganisms, which are responsible for purifying the water, thus becoming a biofilter; and an aeration unit to supply oxygen inside the tank aimed at promoting the aerobic metabolism of the microorganisms, thus preventing the occurrence of bad odors and keeping the biocarriers in constant agitation for their interaction with the water.

The aeration unit provides constant agitation of the biocarriers thus allowing the interaction between the microorganisms and the water for filtration and purification. In addition, the aeration unit injects air for promoting the aerobic metabolism of the microorganisms in the biofilter, due to the addition of oxygen in the device.

The biocarrier design is developed in such a way that it provides a hydrodynamic performance aimed at facilitating the wastewater biofiltration process, particularly graywater, so that the biocarriers achieve a greater interaction with water and air, as well as with oxygen and aerobic metabolism.

The tank comprises an inlet for routing the water to be treated and for discharging the water after it has been filtered and purified. Optionally, the tank may include an outlet separated from the inlet for discharging the water once it has been filtered and purified. In one embodiment, the device may optionally include a pre-filter at its inlet aimed at removing particles and suspended solids in the water to be treated prior to its entry into the tank. In one embodiment, the device collects wastewater, in particular gray water, from showers, bathtubs, hand washing and/or laundry to be treated until it is purified.

The microorganisms are embedded in biocarriers that correspond to an inert and light substrate, which allows the growth of microorganisms inside, which are designed for their movement in the water thus favoring the interaction between the microorganisms and the water, and ensuring purification of the treated water.

The biocarrier container confines the grown microorganisms on a plurality of biocarriers and it is mounted inside the tank. In one embodiment, the biocarrier container includes attachment means allowing the container to be anchored inside the tank in such a way that it is suspended or floating without being in contact with the walls of the tank.

The device may comprise connections that allow routing the water to be treated from its source to the collection tank. The device may also include water pumps to discharge purified water to and from the tank, respectively, to facilitate water transportation to be treated and discharge of purified water to and from the tank.

In addition, the device may optionally include a real-time monitoring system, aimed at measuring water quality parameters by using sensors that are integrated in a centralized circuit.

### BRIEF DESCRIPTION OF THE DRAWINGS

The drawings are included in order to provide a greater understanding of the invention and are part of this description and further illustrate a preferred embodiment of the invention, wherein it is seen that:
Figure 1 shows the device for the filtration and purification of wastewater, such as gray water, in accordance with one embodiment of the invention.
Figure 2 shows the biocarrier container, in accordance with one embodiment of the invention.
Figure 3 shows the opening of the tank, in accordance with one embodiment of the invention.
Figure 4 shows the air diffuser ring of the aeration unit which is connected with the biocarrier container, in accordance with one embodiment of the invention.
Figure 5 shows an alternative arrangement of the device for the filtration and purification of wastewater, such as gray water.
Figure 6A shows an isometric view of a first biocarrier design.
Figure 6B shows a front view of a first biocarrier design.
Figure 7A shows an isometric view of a second biocarrier design.
Figure 7B shows a front view of a second biocarrier design.
Figure 8 shows a biocarrier design according to the prior art.
Figure 9A shows the volume for the commercial K3 biocarrier and for each type of biocarrier manufactured in PLA.
Figure 9B shows the volume for the commercial K3 biocarrier and for each type of biocarrier manufactured in PETG.
Figure 10A shows the mass for the commercial K3 biocarrier and for each type of biocarrier manufactured in PLA.
Figure 10B shows the mass for the commercial K3 biocarrier and for each type of biocarrier manufactured in PETG.
Figure 11A shows the flotation time registered for the commercial K3 biocarrier and for each type of PLA biocarrier.
Figure 11B shows the flotation time registered for the commercial K3 biocarrier and for each type of biocarrier manufactured in PETG.
Figure 12A shows the suspension time registered for the commercial K3 biocarrier and for each type of biocarrier manufactured in PLA.
Figure 12B shows the suspension time registered for the commercial K3 biocarrier and for each type of biocarrier manufactured in PETG.
Figure 13A shows the base time registered for the commercial K3 biocarrier and for each type of biocarrier manufactured in PLA.
Figure 13B shows the time on base registered for the commercial K3 biocarrier and for each type of biocarrier manufactured in PETG.
Figure 14A shows the number of vertical spins for the commercial K3 biocarrier and for each type of biocarrier manufactured in PLA.
Figure 14B shows the number of vertical spins for the commercial K3 biocarrier and for each type of biocarrier manufactured in PETG.
Figure 15A shows the number of clockwise spins for the commercial K3 biocarrier and for each type of biocarrier manufactured in PLA.
Figure 15B shows the number of clockwise spins for the commercial K3 biocarrier and for each type of biocarrier manufactured in PETG.
Figure 16A shows the number of counterclockwise spins for the commercial K3 biocarrier and for each type of biocarrier manufactured in PLA.
Figure 16B shows the number of counterclockwise spins for the commercial K3 biocarrier and for each type of biocarrier manufactured in PETG.
Figure 17A shows the growth of microorganisms after 5 weeks in the K3 biocarrier manufactured in HDPE comparing the initial state (left) and the final state (right).
Figure 17B shows the growth of microorganisms after 5 weeks on the K3 biocarrier manufactured in PETG comparing the initial state (left) and the final state (right).
Figure 17C shows the growth of microorganisms after 5 weeks on the K3 biocarrier manufactured in PLA comparing the initial state (left) and the final state (right).
Figure 18A shows the growth of microorganisms after 5 weeks on the V1 biocarrier manufactured in PETG comparing the initial state (left) and the final state (right).
Figure 18B shows the growth of microorganisms after 5 weeks on the V1 biocarrier manufactured in PLA comparing the initial state (left) and the final state (right).
Figure 19A shows the growth of microorganisms after 5 weeks on the V2 biocarrier manufactured in PETG comparing the initial state (left) and the final state (right).
Figure 19B shows the growth of microorganisms after 5 weeks on the V2 biocarrier manufactured in PLA comparing the initial state (left) and the final state (right).
Figure 20A shows the amount of fresh biomass after 3 months for the commercial version of the K3 biocarrier and each type biocarrier manufactured in PLA.
Figure 20B shows the amount of fresh biomass after 3 months for the commercial version of the K3 biocarrier and each type of biocarrier manufactured in PETG.
Figure 21A shows the amount of dry biomass after 3 months for the commercial version of the K3 biocarrier and for each type of biocarrier manufactured in PLA.
Figure 21B shows the amount of dry biomass after 3 months for the commercial version of the K3 biocarrier and for each type of biocarrier manufactured in PETG.
Figure 22A shows the bacterial density obtained in the water quality test considering a biomass growth of 3 months, constant aeration and weekly gray water change, for the commercial version of the K3 biocarrier and for each type of biocarrier manufactured in PLA.
Figure 22B shows the bacterial density obtained in the water quality test considering a biomass growth of 3 months, constant aeration and weekly gray water change, for the commercial version of the K3 biocarrier and for each type of biocarrier manufactured in PETG.
Figure 23A shows the quantification of the metabolic activity of the biomass obtained after 3 months, under constant aeration and weekly gray water change, for the commercial version of the K3 biocarrier and for each type of biocarrier manufactured in PLA.
Figure 23B shows the quantification of the metabolic activity of the biomass obtained after 3 months, under constant aeration and weekly gray water change, for the commercial version of the K3 biocarrier and for each type of biocarrier manufactured in PETG.
Figure 24A shows the percentage of water turbidity removal with respect to day 0 (untreated water), obtained in the water quality test after 24 hours of treatment, considering a biomass growth of 3 months, constant aeration and weekly gray water change, for the commercial version of the K3 biocarrier and for each type of biocarrier manufactured in PLA.
Figure 24B shows the percentage of water turbidity removal with respect to day 0 (untreated water), obtained in the water quality test after 24 hours of treatment, considering a biomass growth of 3 months, constant aeration and weekly gray water change, for the commercial version of the K3 biocarrier and for each type of biocarrier manufactured in PETG.
Figure 25A shows the removal percentage of chemical oxygen demand of water with respect to day 0 (untreated water), obtained in the water quality test after 24 hours of treatment, considering a biomass growth of 3 months, constant aeration and weekly gray water change, for the commercial version of the K3 biocarrier and for each type of biocarrier manufactured in PLA.
Figure 25B shows the removal percentage of chemical oxygen demand of water with respect to day 0 (untreated water), obtained in the water quality test after 24 hours of treatment, considering a biomass growth of 3 months, constant aeration and weekly gray water change, for the commercial version of the K3 biocarrier and for each type of biocarrier manufactured in PETG.

### DETAILED DESCRIPTION OF THE INVENTION

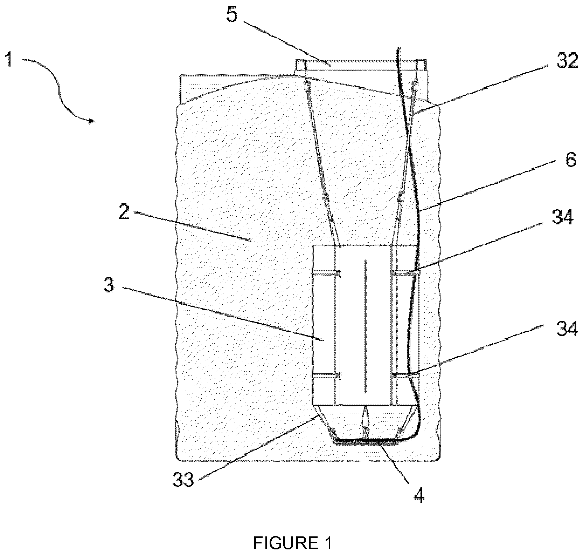

The invention relates to an integrated device (1) for the filtration and purification of wastewater, such as gray water, which allows the reuse of such water to aimed at generating a new water source, the integrated device (1) corresponds to a biological type filtering device, as shown in figure 1, comprising a tank (2) for the collection of the water to be treated, a biocarrier container (3), placed inside the tank (2), comprising a plurality of biocarriers containing microorganisms grown which purify the water; thus becoming a biofilter; and an aeration unit configured to supply oxygen inside of the tank in order to promote the aerobic metabolism of the microorganisms, prevent the appearance of bad odors and to keep the biocarriers in constant agitation to promote their interaction with the water. The tank (2) includes an inlet or opening (5) for routing the water to be treated and for discharging the water once it has been filtered and purified. Optionally, the tank (2) may include an outlet or discharge separate from the inlet or opening (5) for discharging the water once filtered and purified. In one embodiment, the microorganisms grow in the form of biofilms. In the case of treating or purifying wastewater, particularly gray water, the device collects the gray water from showers, bathtubs, hand washing and/or laundry to be treated until its purification is achieved.

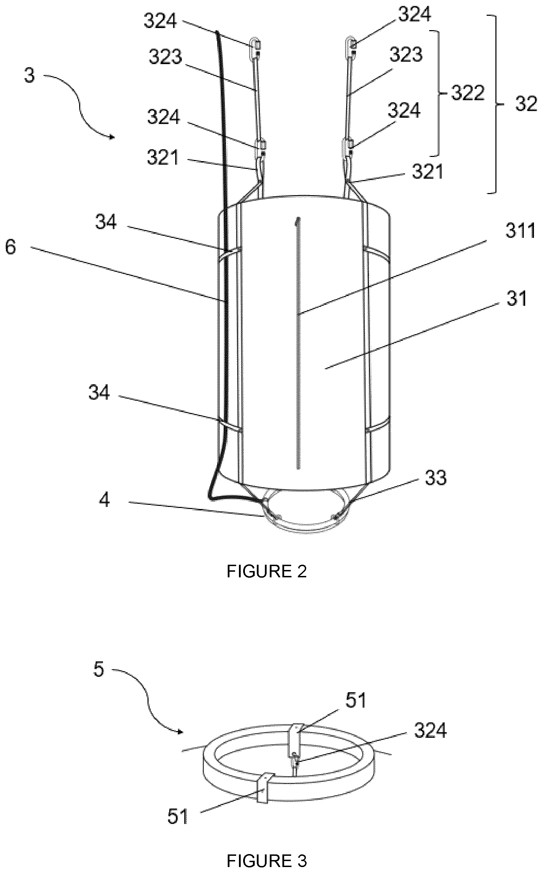

The biocarrier container (3) keeps the grown microorganisms confined on the plurality of biocarriers, as shown in figure 2, comprising an elongated body (31), made of a water permeable material, with a top end and a bottom end, opposite to each other, wherein the bottom end comprises connecting means (33) for connection to the aeration unit.

In one embodiment, the upper end of the biocarrier container (3) comprises fastening means (32) that allow anchoring or mounting the biocarrier container (3) to the tank (2), wherein the fixing means (32) allow anchoring the biocarrier container (3) to the opening (5) of the tank (2), such that the biocarrier container (3) is suspended or floating inside the tank (2) without being in contact with the walls thereof and aligned with its opening (5). The biocarrier container (3) can be suspended at different heights inside the tank (2), between a position where the upper end of the body (31) matches the opening (5) of the tank to a position where the lower end of the body (31) is close to a lower wall of the tank (2), while the biocarrier container (3) is not in contact with any wall of the tank (2). The position of the biocarrier container (3) inside the tank (2) is determined by the fixing means (32), which can be fixed or adjustable.

In one embodiment, the fixing means (32) comprise at least two tie straps (321) at the upper end of the body (31) of the biocarrier container (3); at least two fixing elements (322) constituted by a support strap (323) whose ends include quick connectors (324) that attach to a tie strap (321) and to the opening (5) of the tank (2), respectively. The length of the support strap (323) determines the height at which the biocarrier container (3) is suspended, and may be of a fixed length to define a fixed suspension height or of variable or adjustable length to modify the position of the biocarrier container (3) inside the tank (2). The support straps (323) may include loops at their ends for attaching the quick connectors (324).

In one embodiment, as shown in figure 3, the opening (5) of the tank (2) comprises at least two mounting hooks (51) that facilitate and secure the mounting or anchoring of the fixing means (32). Specifically, the mounting hooks (51) can be connected with a quick connector (324) of the fastening elements (322) on the fixing means (32). Preferably, the quick connectors (324) and the mounting hooks (51) are made of stainless material, such as, for instance, stainless steel.

In one embodiment, the body (31) of the biocarrier container (3) is a bag of porous material fabric of cylindrical shape comprising a closure (311), preferably of plastic, for access to the interior of the body (31) for placing and/or replacing the biocarriers. Preferably, the porous material fabric is manufactured from recycled fabrics or from a material of plant origin.

To ensure that the body (31) maintains its shape, the biocarrier container (3) may include a ring at each end of said body (31). In one embodiment, said rings are manufactured with planza (polyethylene pipe), a material designed to be in contact with water. In another embodiment, said rings are made of stainless steel.

The aeration unit comprises an air diffusing ring (4), attached to the biocarrier container (3) at the lower end of the body (31), connected to one end of an air hose (6), wherein the air hose (6) exits the tank (2) so that the other end is connected to a mini air compressor that injects air into the tank (2) through the air diffusing ring (4), wherein the air diffusing ring (4) comprises a support, in the form of a ring, coupled to a diffuser hose, circular in shape, from which air microbubbles emerge to supply oxygen into the tank (2) to promote the aerobic metabolism of the microorganisms and prevent the appearance of bad odors. The support of the air diffusing ring (4) is used to shape its structure, preferably made of stainless steel. The bubbles generated by the air diffusing ring (4) maintain in constant agitation the plurality of biocarriers favoring the interaction between the microorganisms and the water for their filtration and purification. Preferably, the position of the biocarrier container (3) inside the tank (2) is such that the air diffusing ring (4) is completely submerged, but is not in contact with the tank (2) in order to avoid the noise caused by the vibration of said ring (4), which may cause discomfort to the user.

In one embodiment, it is possible to use a mini compressor of at least 38 Watts for water treatment in a 1,000 liter tank and a mini compressor of at least 58 Watts for water treatment in a 2,000 liter tank.

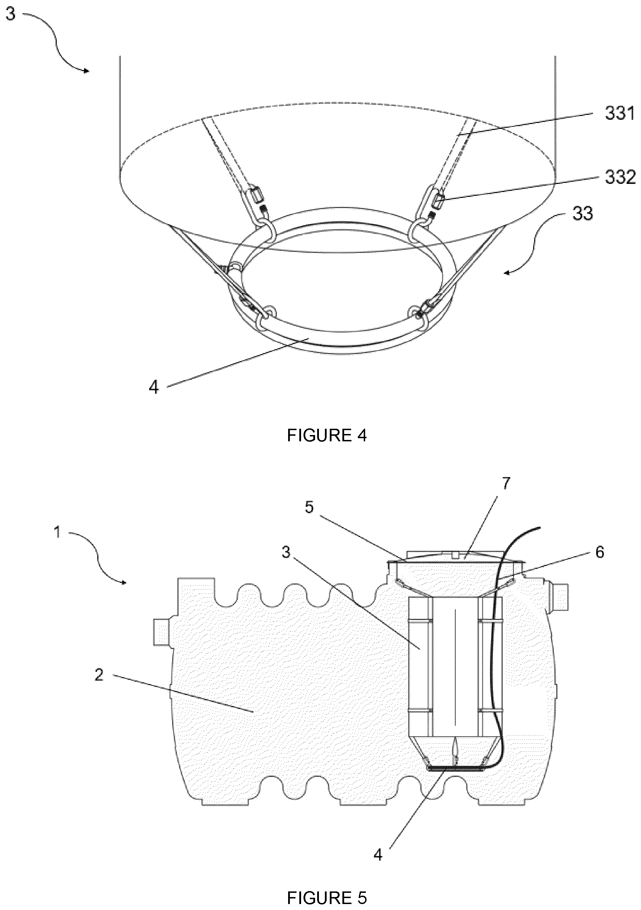

As shown in figure 4, the air diffusing ring (4) is attached to the biocarrier container (3) by connecting means (33) at the lower end of the body (31). The connecting means (33) comprise at least four support strips (331), wherein one end of said strips (331) is attached to the lower end of the body (31) and the other end is connected with the air diffusing ring (4). In one embodiment, the connection between the connecting means (33) and the air diffusing ring (4) is made using a hook (332) at each end of the support strips (331). The support strips (331) may include a loop at their ends for positioning the hook (332). Preferably, the hooks (332) are made of stainless steel. In another embodiment, the connection between the connecting means (33) and the air diffusing ring (4) is made by using cable ties.

In one embodiment, a portion of the air hose (6) is fixed to the body (31) of the biocarrier container (3) using at least one transverse pin (34) near each end of said body (31), such that said portion of the air hose (6) remains parallel to the longitudinal axis of the body (31). In another embodiment, the air hose (6) is arranged inside the tank (2) without being attached to the biocarrier container (3).

In one embodiment, the tank (2) is substantially cylindrical and can have a vertical configuration, as in figure 1, or a horizontal configuration, as in figure5. In case the tank (2) has a vertical configuration, the opening (5) is on the top face and in case the tank (2) is in a horizontal configuration, the opening (5) is on the top of the tank (2) corresponding to the curved surface or body of the cylinder. In both cases, the biocarrier container (3) and the aeration unit are arranged equivalently. In the embodiment in which the biocarriers container (3) is anchored or mounted on the tank (2), said biocarrier container (3) is arranged such that it is aligned with the opening (5) in the vertical direction. Furthermore, the opening (5) includes a protection means that prevents the entry of foreign matter or contaminants, said protection means being, in one embodiment, a lid (7) covering the opening (5).

In one embodiment, the device (1) may include a prefilter before or in the opening (5) for removing particles and suspended solids in the water to be treated before its entry into the tank (2) or after the treatment has been performed once the water has already been biofiltered.

The device (1) may include connections that allow channeling the water to be treated from its source to the collection tank (2). Also, the device (1) may include water pumps to facilitate the feeding of water to be treated and the discharge of purified water to and from the tank (2), respectively. Optionally, the device (1) may include connections to communicate with a post-treatment tank for storing the treated or biofiltered water.

Optionally, the device (1) may further comprise a real-time monitoring system, which allows measuring water quality parameters through sensors that are integrated in a centralized circuit and controlling the operation of the device (1). The monitoring system measures at least the pH, turbidity, temperature and electrical conductivity of the water in the tank (2). The monitoring system further comprises a timer to generate different aeration cycles (on/off) to control the water purification time.

The device (1) can be used for different purposes according to the user's needs, such as, for example, in low cost and high efficiency drip irrigation systems for the distribution of water to plant roots, toilet flushing or other domestic or industrial uses, according to the regulations of the country where the device is implemented. In addition, the device (1) may incorporate the use of renewable energy, e.g., solar energy by using solar panels, as a source of power supply with electricity to ensure autonomous operation.

Furthermore, the device (1) can be automated by implementing a controller that allows the general operation of the device (1), the feeding/discharge of water, and optionally it may include water quality parameters.

The microorganisms are established in the plurality of biocarriers that correspond to an inert and light substrate that allow the growth of microorganisms and colonization, where said biocarriers are designed for their movement in the water favoring the interaction between the microorganisms and the water, ensuring the purification of the water. The microorganisms correspond to specialized consortia that efficiently remove contaminants from wastewater, such as gray water, resist unfavorable conditions and adapt dynamically to variations in the composition of the water to be treated, to changes in pH, humidity and temperature. In one embodiment, the microorganisms of the device (1) are environmental microorganisms that exhibit filtering capabilities and that can grow attached to a substrate. In order to be used, the microorganisms are previously enriched to ensure filtering efficiency, so as to have microorganisms grown on the substrate, to be included in the biocarrier container (3). In one embodiment, the biomass growth of the microorganisms on the biocarriers should be at least 3 months to ensure filtering efficiency.

The described device (1) can be implemented at various scales, such as, for example, for on-site reuse of shower water for toilet flushing, reuse of water from washing machines, or reuse of total gray water from a house, from a group of houses or larger buildings, or even on an industrial scale. In this way the device (1) can be scaled for use with different flow rates of wastewater, particularly gray water, where the size of the tank (2) can be of any volume that is available depending on the user's needs.

The device (1) allows the filtration of wastewater, particularly gray water, in a time between 12 to 24 hours depending on the volume of water. In this regard, it has been verified that at least 1 kilo of biocarriers is required to filter 1,000 liters of gray water, requiring 12 hours for water treatment. To treat other volumes, the biocarriers are scaled proportionally to the biomass required for treatment. It is possible to accelerate the filtration process by adding biocarriers to the device (1) in order to reduce the treatment time while maintaining the volume of water to be treated. To ensure optimal performance of the system, ¼ of the biocarriers should be replaced every 18 months.

The size of the biocarrier container (3) is adjusted to the amount of biocarriers used, so as to allows the movement of the biocarriers inside it when they are agitated by the aeration unit.

In one embodiment, the plurality of biocarriers can be inserted directly into the tank (2) without using the biocarrier container (3), allowing free circulation of the biocarriers with microorganisms inside the tank (2).

In one embodiment, the device (1) is integrated with a post-treatment disinfection system, including chlorination, ultraviolet light, ozone or other chemical and physicochemical methods.

The biocarrier design was developed to provide a hydrodynamic performance that favors the biofiltration process of wastewater, such as gray water, so that the biocarriers achieve a greater interaction with water and air, thus, the oxygen that promotes aerobic metabolism. In this regard, the biocarrier comprises a hollow cylindrical outer ring (81); a polygonal inner ring (82), concentric with the outer ring (81) and located in the center thereof; an intermediate ring (83) between said polygonal inner ring (82) and the outer ring (81), concentric to these and separating the biocarrier into a plurality of sections; wherein, from each vertex of the polygon of the polygonal inner ring (82) a first curved rib (84) is projected connecting all the rings (81, 82, 83) of the biocarrier, wherein each first rib (84) further projects outwardly from the outer ring (81) forming vanes (86) or blades around the outer ring (81); and between each pair of first ribs (84) is disposed a second curved rib (85) which is connected between the outer wall of the intermediate ring (83) and the inner wall of the outer ring (81). Both the first rib (84) and the second rib (85) have an equivalent curvature.

The intersections formed between the rings (81, 82, 83) and the ribs (84, 85) form a plurality of cavities that increase the surface area of the biocarrier, thus improving the ability of microorganisms to grow inside it.

The vanes (86) around the outer ring (81) of the biocarrier facilitate the rotation in the direction of the vanes (86) in order to generate a greater interaction between the biocarrier and the water, thus maximizing the contacts between the water to be treated and the biocarrier, as well as the transfer of oxygen to the microorganisms in order to promote their aerobic metabolism, and with it, the operation of the water purification process. In this way, the design of the biocarrier has a hydrodynamic performance that favors the biofiltration process of wastewater, such as gray water.

In one embodiment, the biocarrier further comprises at least one additional intermediate ring (87) between the intermediate ring (83) and the polygonal inner ring (82), wherein the radius of the intermediate ring (83) and the the at least one additional intermediate ring (87) are such that all rings (81, 82, 83, 87) of the biocarrier are radially separated by the same distance. By including additional intermediate rings, additional cavities are formed which increase the surface area on which microorganisms can grow.

The cavities and surface area of the biocarrier facilitate a greater growth of microorganisms, where the addition of vanes (86) contributes with new biomass adhesion points that allow the beginning of colonization in the context of aeration, movement and constant agitation of the biocarriers inside the biocarrier container (3) that is submerged in the water to be treated.

This biocarrier design increases the surface area, the number of cavities and hydrodynamic interactions to enhance biomass growth, decreasing production costs and allowing local manufacturing.

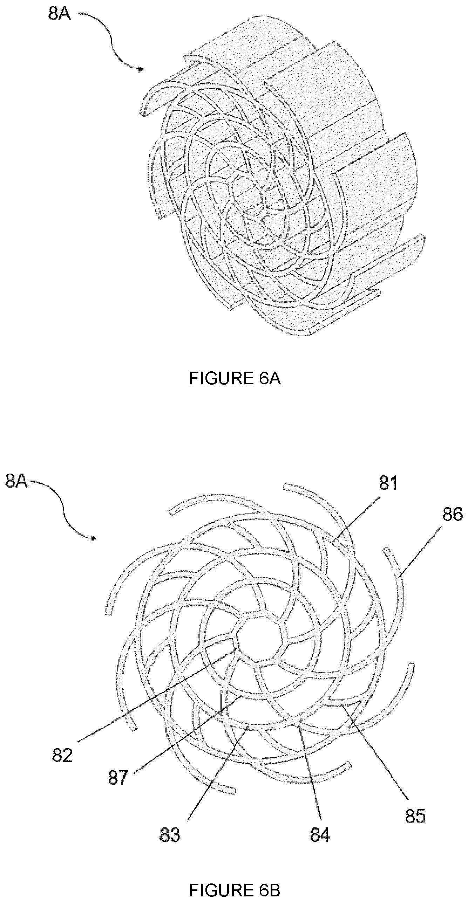

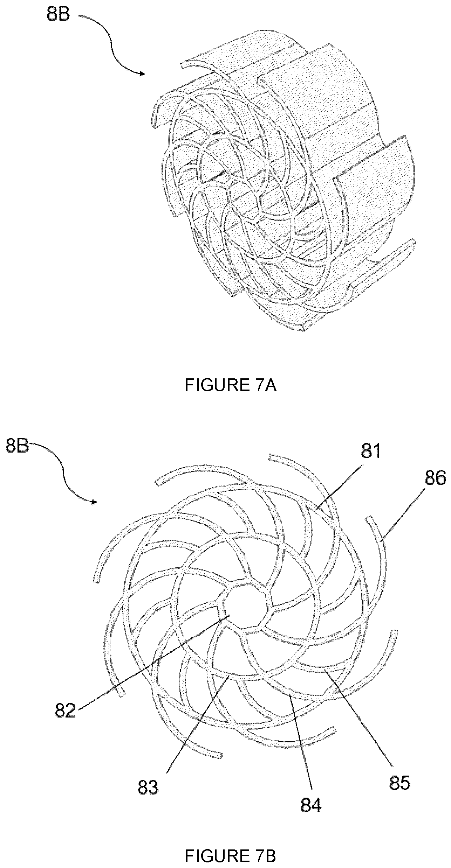

Figures 6A, 6B, 7A and 7B show embodiments of the biocarrier , according to the indicated elements. Figures 6A and 6B shows a first biocarrier (8A) comprising an outer ring (81); a polygonal inner ring (82) of octagonal shape; an intermediate ring (83) between said polygonal inner ring (82) and the outer ring (81); an additional intermediate ring (87), between the intermediate ring (83) and the polygonal inner ring (82); eight first curved ribs (84) extending from each vertex of the inner polygonal ring (82), forming eight vanes (86) around the outer ring (81); and eight second curved ribs (85), each disposed between each pair of first ribs (85) between the intermediate ring (83) and the outer ring (81). Thus, the first biocarrier (8A) includes thirty-three cavities and eight vanes (86). On the other hand, figures 7A and 7B show a second biocarrier (8B) comprising an outer ring (81); a polygonal inner ring (82) of octagonal shape; an intermediate ring (83) between said polygonal inner ring (82) and the outer ring (81); eight curved first ribs (84) projecting from each vertex of the polygonal inner ring (82), forming eight vanes (86) around the outer ring (81); and eight curved second ribs (85), each arranged between each pair of first ribs (85) between the intermediate ring (83) and the outer ring (81). Thus, the second biocarrier (8B) includes twenty-five cavities and eight vanes (86).

The microorganisms used in the device (1) are adapted to grow attached to a plastic substrate, the biocarriers being fabricated from High Density Polyethylene (HDPE), Polyethylene Terephthalate Glycol (PETG) or Polylactic Acid (PLA). In one embodiment, the biocarriers are manufactured using a 3D printer.

### EXPERIMENTAL RESULTS:

### Biocarrier designs:

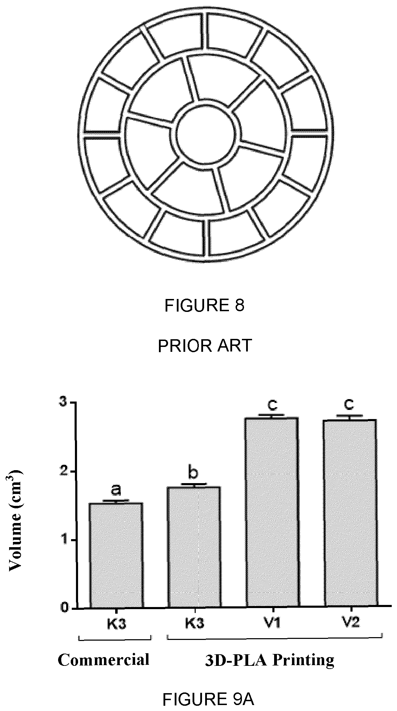

For the tests, biocarrier designs are considered according to the first biocarrier (8A) designated version 1 or V1, which includes thirty-three cavities and eight vanes; the second biocarrier (8B) designated version 2 or V2, which includes twenty-five cavities and eight vanes; and a third biocarrier designated K3 that corresponds to a commercially available biocarrier, which is shown in figure 8 and includes 19 cavities, with no vanes. The size of the biocarriers considered for testing are the same for the three designs where they have a cavity area of 6027 mm² for the first biocarrier (8A) 5650 mm² for the second biocarrier (8B) and 3309 mm² for the K3 biocarrier.

For the tests, the following conditions were set::
(i) Biocarrier version K3 (or commercial version) in HDPE material: this substrate is the one available on the market.
(ii) Biocarrier K3 version in PETG material: substrate obtained by 3D printing using PETG filaments in order to compare with the rest of the conditions.
(iii) Biocarrier version K3 in PLA material: substrate obtained by 3D printing using PLA filaments in order to compare with the rest of the conditions.
(iv) Biocarrier version 1 in PETG material: substrate obtained by 3D printing using PETG filaments in order to compare with the rest of the conditions.
(v) Biocarrier version 1 in PLA material: substrate obtained by 3D printing using PLA filaments in order to compare with the rest of the conditions.
(vi) Biocarrier version 2 in PETG material: substrate obtained by 3D printing using PETG filaments in order to be able to compare with the rest of the conditions.
(vii) Biocarrier version 2 in PLA material: substrate obtained by 3D printing using PLA filaments in order to compare with the rest of the conditions.

### General Characterization:

As a general characterization, volume, surface area and mass were measured for each version of the Biocarrier.

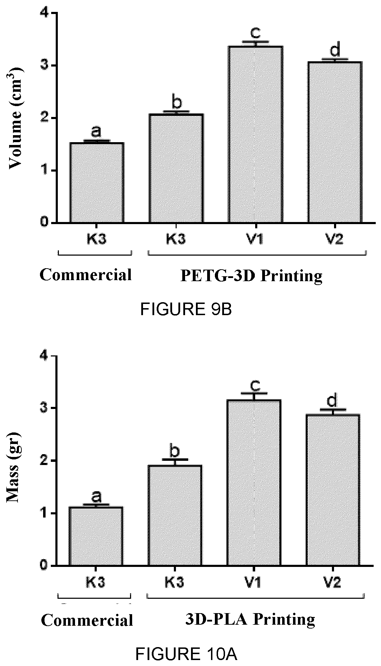

Regarding volume, as shown in figures 9A and 9B, the commercial version K3 (HDPE) was observed to have the lowest volume of all biocarrier versions. In general, the K3 version has lower volume (in all its materials) than V1 and V2. V1 has the same volume as V2 in PLA material, but V1 has a significantly larger volume in PETG material. In terms of materials, it can be mentioned that PETG material occupies more volume than PLA.

Regarding the surface area, table 1 shows the number of cavity and surface area for the 3 biocarrier geometries considered, where it is obtained that both V1 and V2, have a greater number of internal cavities, with respect to K3, in particular, V1 increases by 73% and V2 by 31%. In addition, the new versions of biocarriers have a greater surface area with respect to K3, where V1 increases by 82% and V2 increases by 70%.

**Table 1: Number of cavities and surface area for biocarriers.**

| | **K3** | **V1** | **V2** |
|---|---|---|---|
| Number of inner cavities | 19 | 33 | 25 |
| Number of outer cavities | 0 | 8 | 8 |
| Surface Area | 3309 mm² | 6027 mm² | 5650 mm² |

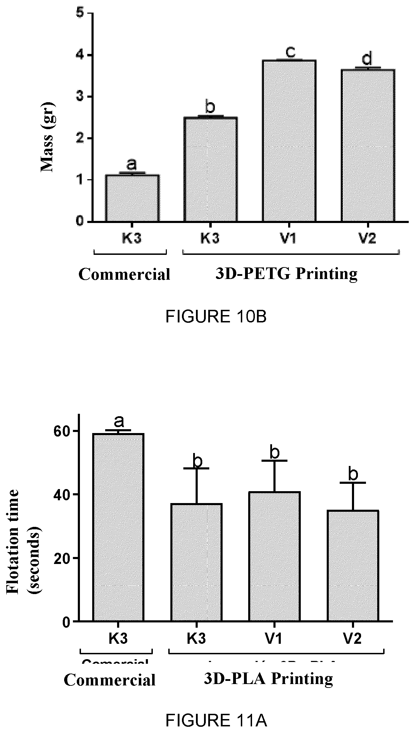

Regarding the mass of the biocarriers, it was characterized whether the increased surface area and volume of the new V1 and V2 designs are related to an increase in the mass of the biocarrier, which could in turn have an effect on its hydrodynamic properties. As shown in figures 10A and 10B, the commercial K3-HDPE Biocarrier is the lightest of all, which makes sense since it is the least dense material (0.95 g/cm³ of HDPE vs. 1.24 g/cm³ of PLA vs. 1.27 g/cm³ of PETG).

In the case of the new biocarrier designs, for both V1 and V2, the biocarriers 3D printed with PETG are heavier than those 3D printed with PLA (same version), which is also explained according to the densities of the materials. For both PLA and PETG, the weight of biocarrier V1 is higher than that of V2, and the weight of V2 in turn is higher than the weight of printed K3. This is explained by the fact that V1 has the largest surface area and thus has more printed material/unit. It is followed in surface area by V2 and then K3, following the same logic.

In summary, one of the aspects sought with the new biocarrier designs was to increase the surface area. The theoretical surface area results correlated well with the volume results. It was found that the volume of the new biocarrier designs increased. In addition, it was found that, as expected, as the surface area of the new biocarriers increased, the mass of each piece increased, which could affect the hydrodynamic properties of the biocarrier.

### Hydrodynamic performance testing:

The purpose of these tests was to determine whether there are differences in hydrodynamic behavior, i.e., interaction with water, among the different types or versions of biocarriers.

The experiment consisted of submerging 10 biocarriers of the same type in a tank with water and aeration, recording a video for one minute each, with the objective of observing their behavior and movements. This process was repeated 10 times for the same type of biocarrier, thus obtaining 10 videos for each type. This was done 7 times in total, that is, once for each different biocarrier design, thus obtaining 70 measurements in total.

In each of the tests, the amount of aeration was kept constant. The volume of water in the tank was also kept constant.

The following parameters were measured:
- Flotation time: refers to the amount of time the biocarriers remain in the water line, being in contact with the air.
- Suspension time: refers to the time the biocarriers are suspended in the tank, i.e., they do not touch the bottom or the water line.
- Bottom time: refers to the time during which the biocarriers remain on the bottom.
- Vertical spins: refers to rotations performed by the biocarriers in a non-circular direction, i.e. around the axis perpendicular to the circumference.
- Clockwise spins: refers to the rotations performed by the biocarrier in a circular fashion around the axis of its circumference in a clockwise direction.
- Counterclockwise spins: refers to the rotations that the biocarrier performs in a circular way around the axis of its circumference in a counterclockwise direction.

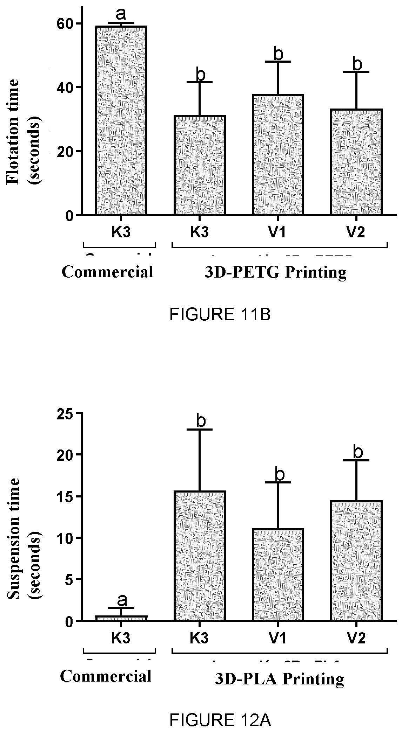

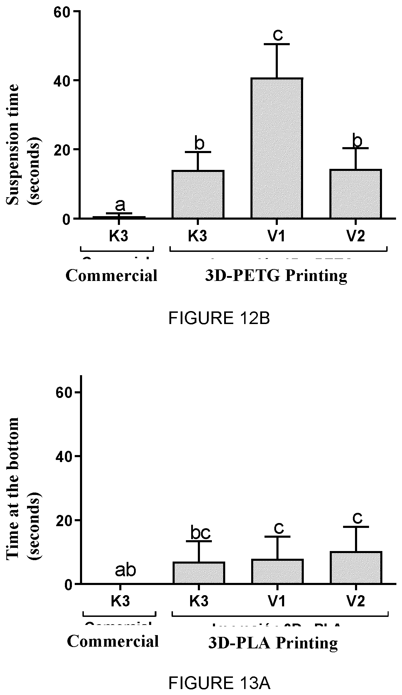

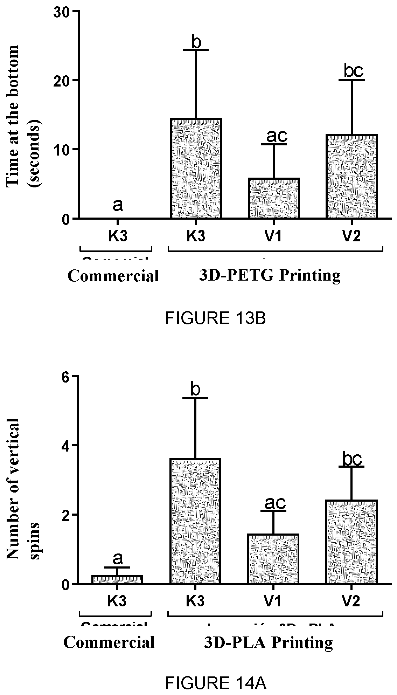

The results obtained for these parameters are shown in figures 11A to 16B. In the results, it is observed that the commercial K3-HDPE biocarrier, as shown in figures 11A and 11B, as it remains floating most of the time, that is, in the upper water line in contact with the air, loses interactions in the water volume zone, thus experiencing the lowest number of spins/rotations of all types, together with the shortest suspension time and at the bottom of the water column, as shown in figures 12A to 13B. When comparing biocarriers of the same material, in the case of PETG, it is observed that V1 made of PETG material presented the longest suspension time in the water (figure 12B), and the shortest time at the bottom of the water column (figure 13B) compared to K3-PETG.

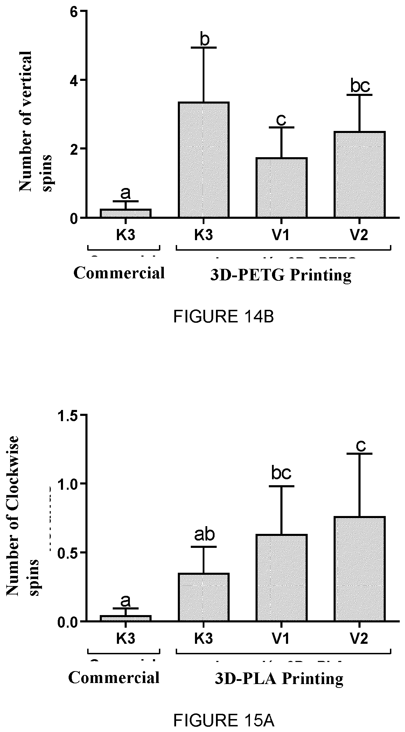

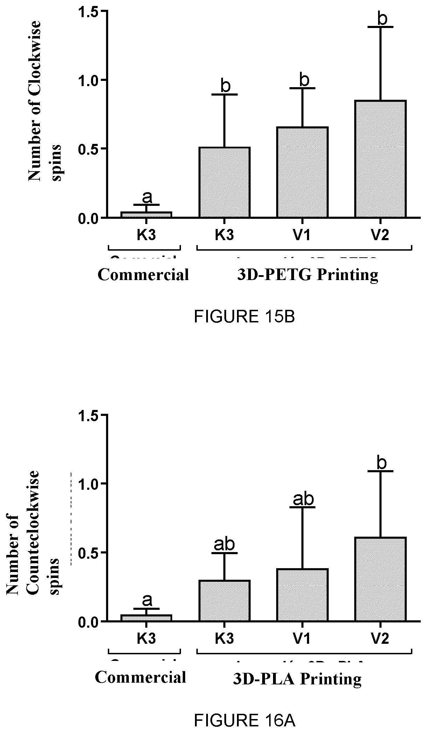

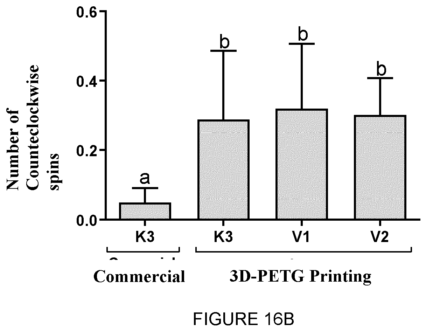

Regarding vertical rotation there was no significant difference between the 3D printed K3 design and V2 in both PLA and PETG (see figures 14A and 14B). The clockwise spinning is higher for the new designs V1 and V2, compared to commercial K3-HDPE, for both PLA and PETG (see figures 15A and 15B), while V2-PLA, it also has higher spinning than K3-PLA, observing an improvement with the new design (figure 15A). In terms of counterclockwise spinning, V2 in both PLA and PETG, performs better than commercial K3-HDPE (see figures 16A and 16B). The improvement in circular spinning is due to the design of vanes built-in in V1 and V2 that allow them to spin, thus favoring their movement in the water.

In conclusion, the new designs V1 and V2 increase the total volume and the movement capacity of the biocarriers in the water, reporting an improvement compared to the commercial K3 geometry, achieving shorter floating time, longer suspension time in the water, and greater vertical and circular spinning of the biocarrier, verifying that the increase in mass of the new designs V1 and V2 does not impair the hydrodynamic behavior of these biocarriers. The improvement obtained in the new designs V1 and V2 allows to generate greater interaction between the biocarriers and the water, to maximize the contact between the water to be treated and the biocarriers, as well as the oxygen transfer to the microorganisms in order to favor their aerobic metabolism, and with it, the water purification process.

### Colonization Tests:

In this case, a test was performed where the biocarrier types were placed into different flasks.

For all conditions, i.e. different types of biocarriers, the inoculum of microorganisms from previously colonized biocarriers was added and domestic gray water (from laundry) was added. Water was changed every 2 weeks and biomass growth on the new biocarriers was monitored. Incubation was carried out after 3 months under conditions of constant aeration and weekly water change. Biomass evaluation was performed after 5 weeks and 3 months, by macroscopic visualization, fresh/dry biomass estimation (analytical balance), bacterial density estimation (sonication and optical density at 600 nm) and metabolic activity estimation (MTT test).

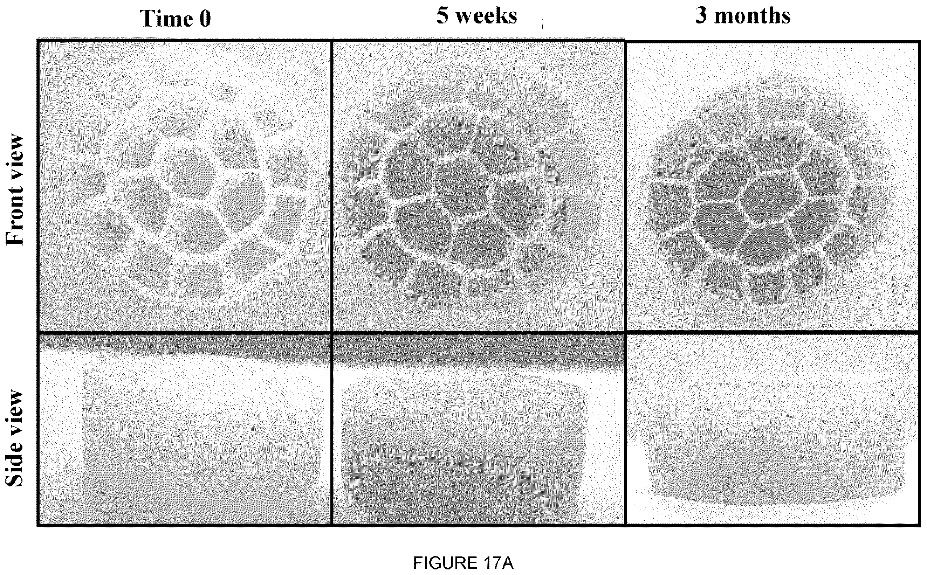

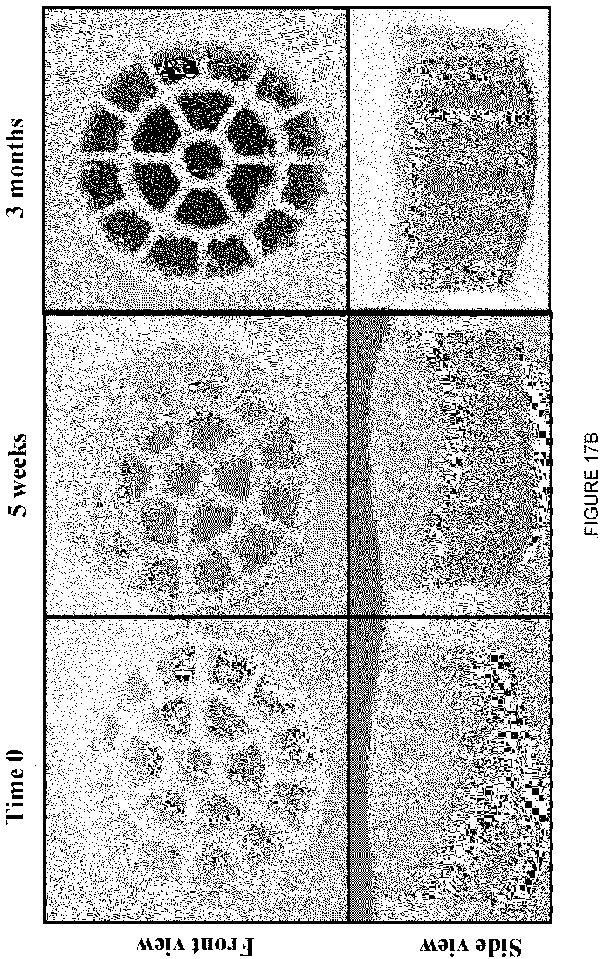

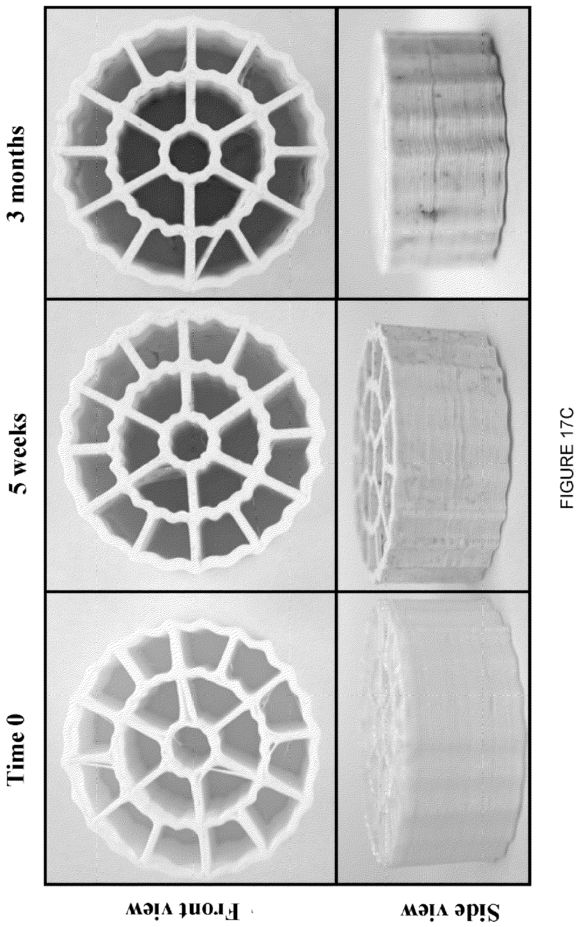

Regarding the macroscopic visualization, when comparing the same type of biocarrier, for example, K3 in the three different types of material, a better colonization is obtained with PETG and PLA. This indicates that the commercial version available in the market K3 (HDPE) is not the best alternative for the growth of the microorganisms in the biofilter, since a greater amount of biomass is observed in the K3 PETG and PLA, as shown in figures 17A, 17B and 17C.

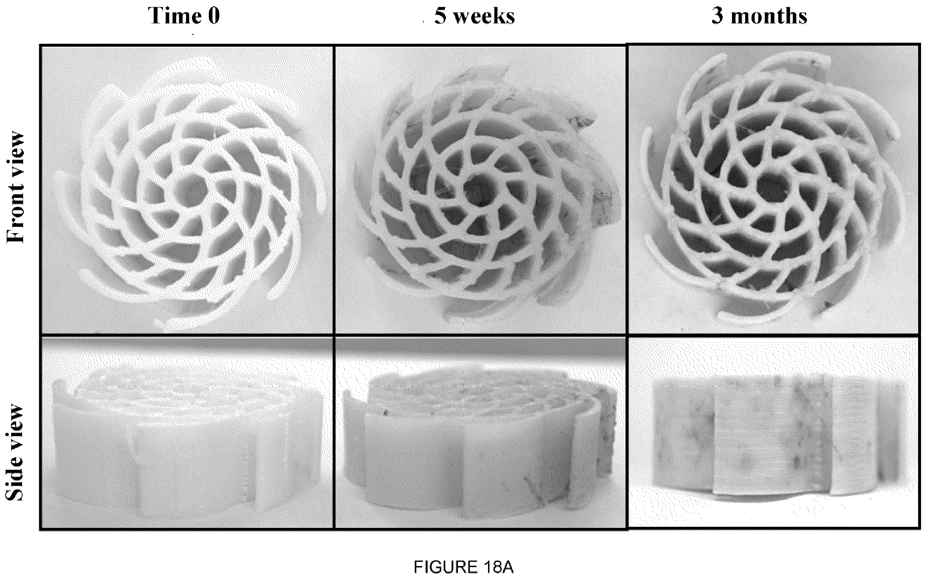

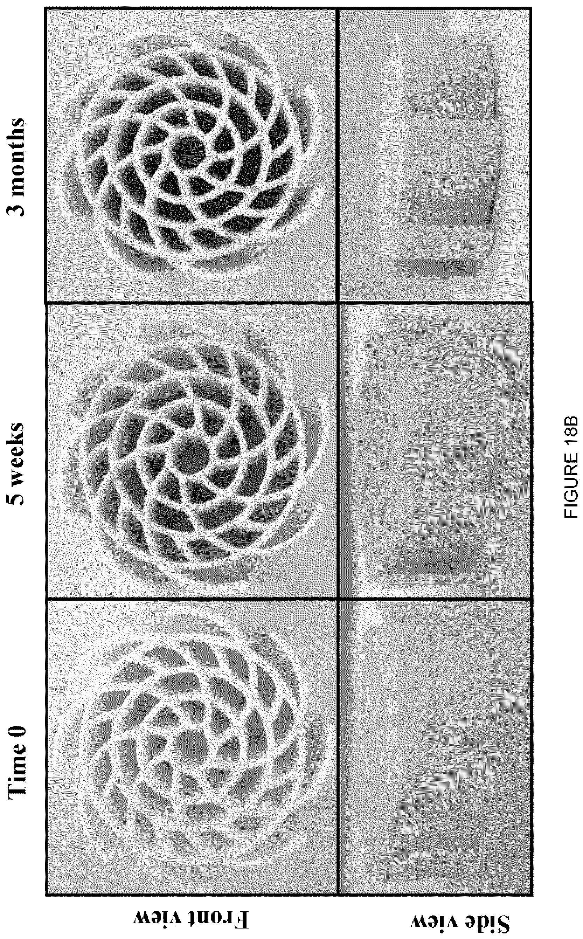

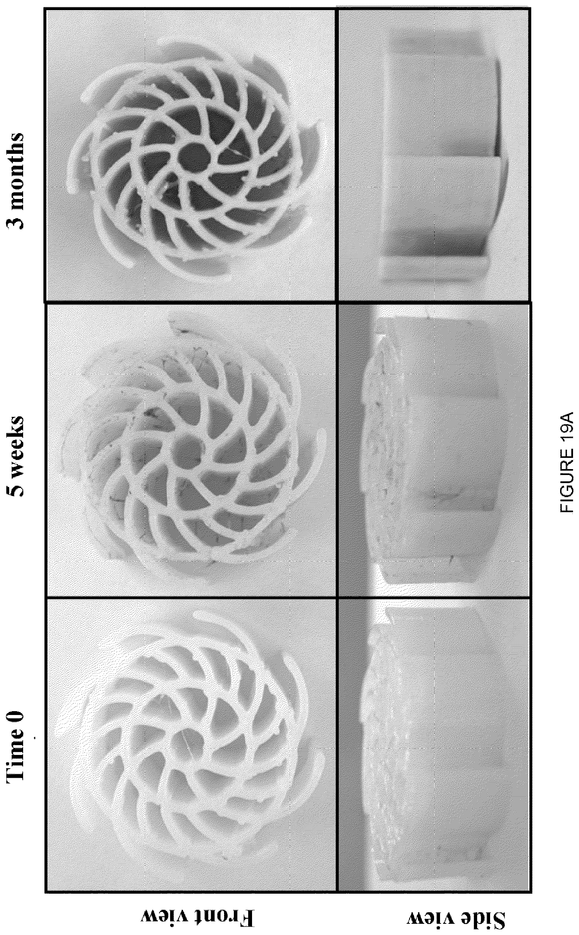

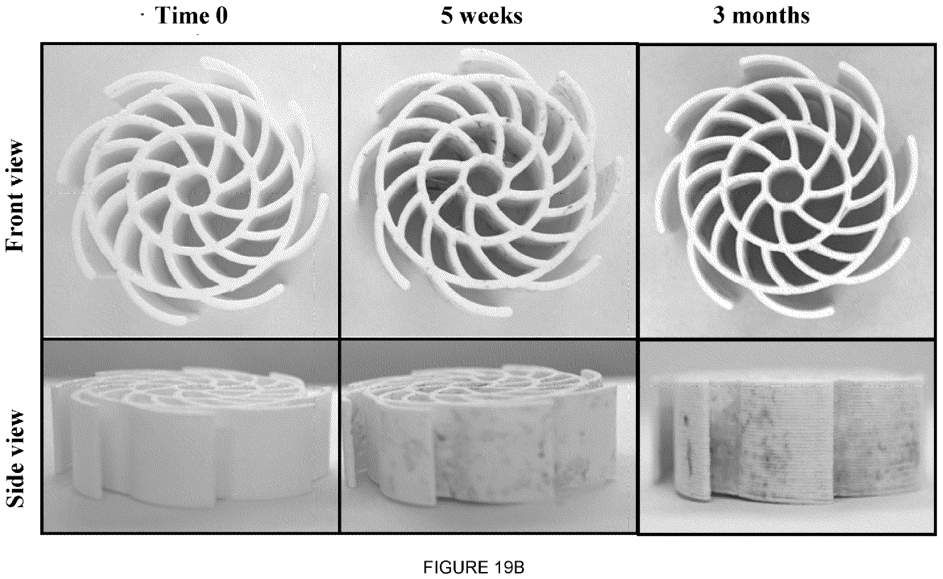

Regarding the new designs, the growth of microorganisms can be observed in figures 18A and 18B, for V1 in PETG and PLA, respectively, and in figures 19A and 19B, for V2 in PETG and PLA. It can be mentioned that for V1 and V2, both PETG and PLA feature a higher growth of microorganisms with respect to the commercial K3 version.

On the other hand, when comparing only the geometries manufactured in PLA, the new versions (either V1 or V2) present better growth compared to the K3-PLA geometry. As for the biocarriers manufactured in PETG, the new V1 design presented better colonization than K3-PETG. The addition of the vanes probably provided new biomass attachment points that allow the initation of colonization in the context of aeration, movement and constant agitation of the biocarriers within the biofilter submerged in gray water. In addition, the new V1 and V2 designs have larger surface area than the K3 design, therefore for each unit of biocarrier there is more surface area available for the settlement and growth of the microorganisms. Regarding the quantification of fresh and dry biomass, the amount of biomass was determined on a high-precision analytical scale. For this purpose, the microorganisms were separated from the biocarriers using sonication, vortexing and centrifugation. The weight of the pellet of fresh microorganisms and the pellet of microorganisms dried for 48 hours at 65°C were measured.

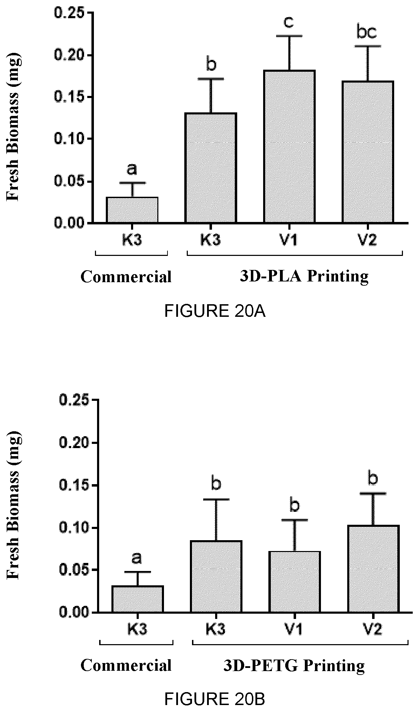

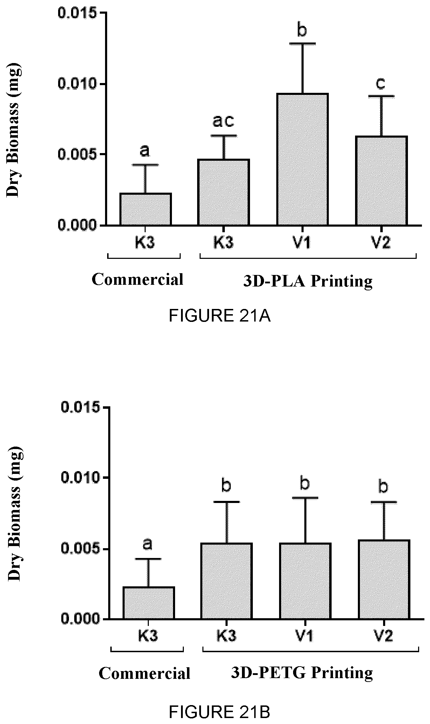

The results in figure 20A show a significant increase in the amount of fresh biomass when using PLA in any geometry, with respect to the commercial K3 Biocarrier (HDPE), i.e. the PLA material has a positive effect on the fresh weight of biomass. Additionally, significantly higher fresh biomass is obtained for V1 compared to K3 PLA, i.e. the change of geometry also has a positive effect on this parameter. Regarding PETG, as shown in figure 20B, the fresh biomass was significantly higher in all geometries compared to commercial K3. Regarding the dry biomass of the PLA biocarriers, as shown in figure 21A, the new geometries V1 and V2 obtain higher biomass with respect to the commercial K3 Biocarrier (HDPE), but not K3 PLA. The highest dry biomass is obtained for V1 compared to the other groups. In the case of the dry biomass of the PETG biocarriers, as shown in figure 21B, all geometries significantly increased the dry weight of biomass compared to commercial K3. In conclusion, the new geometries had a positive effect on biomass, thus obtaining a maximum effect for V1, which allows a significant improvement in the growth of fresh and dry biomass.

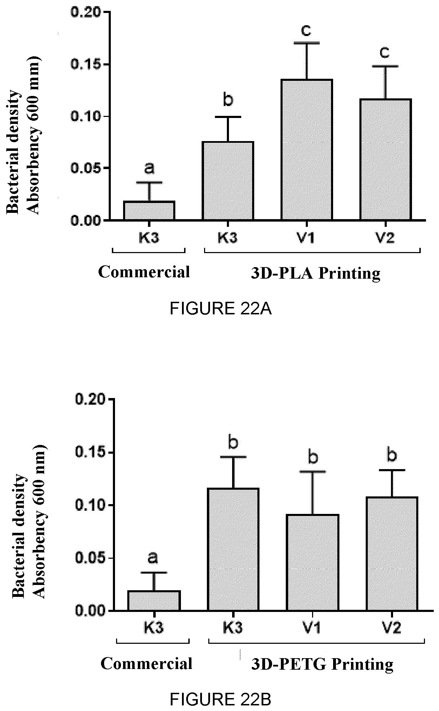

Regarding the quantification of bacterial density (OD600), the absorbance at 600 nm of the microorganisms suspended in PBS buffer solution was measured after the process mentioned in the previous paragraph. Figure 22A shows a higher density of microorganisms in the V1 and V2 biocarriers with respect to the K3-PLA biocarrier and, in turn, to commercial K3, thus obtaining an improvement due to the material (PLA) and the new geometry of the V1 and V2 biocarriers. In the case of PETG, figure 22B shows a higher bacterial density of the three biocarriers in PETG with respect to the commercial biocarrier K3, thus obtaining an improvement due to the new material; however, the results obtained do not represent significant differences when using different biocarrier geometries.

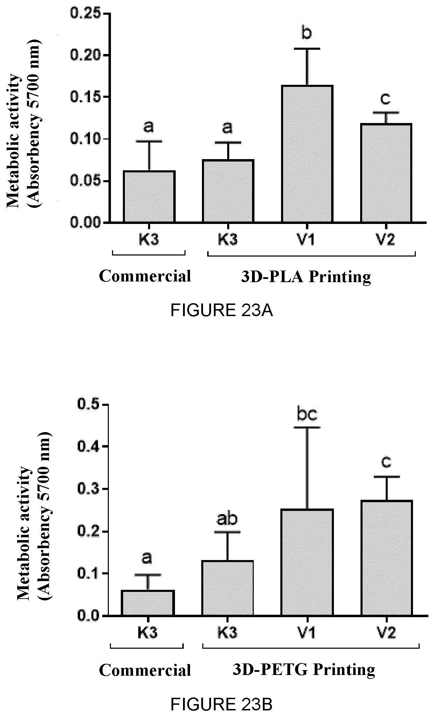

Regarding the metabolic activity, an MTT reduction test was performed by measuring the absorbance at 570nm. Figure 23A, shows a higher activity in the biocarriers V1 and V2 in PLA material, with respect to the commercial K3 biocarrier and K3-PLA, where the K3 biocarrier manufactured in PLA has no significant difference in metabolic activity with respect to the commercial K3 biocarrier. In turn, V1 PLA has a significant improvement in metabolic activity over V2 PLA, which would indicate that the very geometry of V1 promotes a higher metabolic rate of the biocarrier. Figure 23B reveals that the K3-PETG biocarrier has no significant difference in activity compared to its commercial K3-HDPE version, while the new V2 and V1 geometries present a significant increase in activity compared to commercial K3-HDPE. In this way, a better metabolic activity is obtained due to the new geometry of the V1 and V2 biocarriers with respect to the commercial biocarrier, and a higher metabolic activity of the V2 geometry compared to K3 printed on PLA and PETG.

On the other hand, the V1 geometry manufactured in PLA improves the functionality of the biocarrier, thus revealing a higher fresh biomass, dry biomass, bacterial density and metabolic activity compared to the K3 geometry manufactured in PLA. Therefore, when comparing different geometries with the same material, it is proven that the V1 geometry by itself enhances biomass growth, thus improving the functionality of the biocarrier regardless of the effect of the material.

In conclusion, in general, both designs V1 and V2 of biocarriers allow a significant increase in the growth of biomass of microorganisms with respect to the commercial K3 geometry, evaluated through images, fresh and dry weight, and bacterial density, which in turn has a higher metabolic activity that can favor the water filtration process.

### Water Quality Tests:

In order to measure the quality of the biofiltered water, the same experimental setting was used as for the biomass measurement, considering a total biomass growth of 3 months, constant aeration and weekly gray water change, where the types of biocarriers prototyped in different flasks were divided according to the following:
1. Biocarrier version K3 (or commercial) in HDPE material.
2. Biocarrier version K3 in PLA material
3. Biocarrier version K3 in PETG material
4. Biocarrier version 1 in PLA material
5. Biocarrier version 1 in PETG material
6. Biocarrier version 2 in PLA material
7. Biocarrier version 2 in PETG material

200 ml of water were sampled from each flask in order to measure water quality parameters: turbidity removal and chemical oxygen demand (COD).

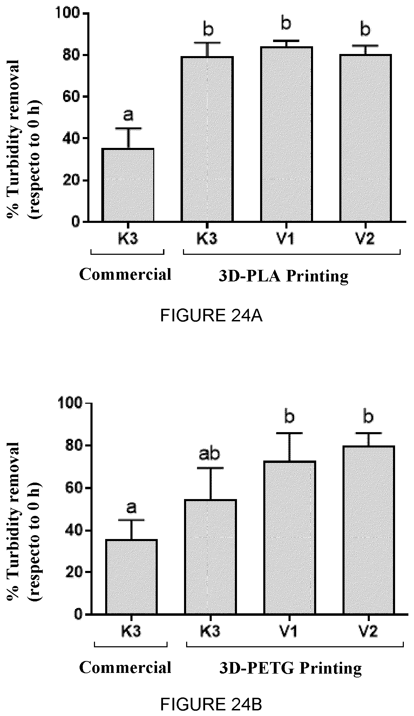

Regarding the quality parameters that account for the water contamination level, measured through turbidity removal with respect to day zero (untreated water) as shown in figures 24A and 24B, a higher turbidity removal was observed for the new designs V1 and V2 manufactured in PLA and also in PETG, with respect to commercial K3-HDPE, reaching more than 80% removal after 24 hours of treatment. Regarding turbidity removal, between the K3-PLA biocarrier and K3-PETG Biocarrier compared to V1 and V2 manufactured in the same material, no significant differences were detected, respectively, thus obtaining high levels of removal in all groups.

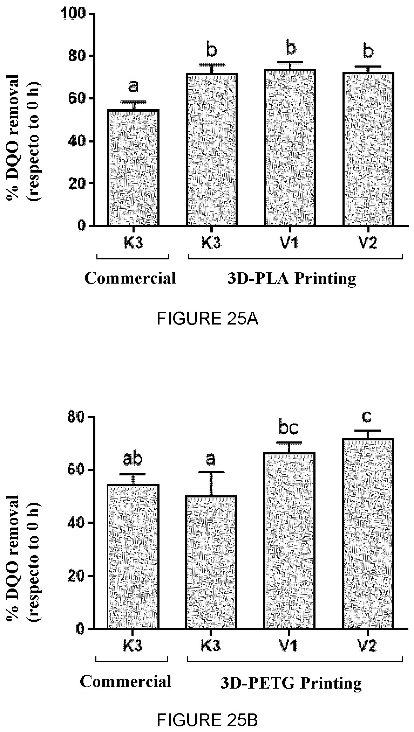

Finally, chemical oxygen demand (COD) removal was quantified with respect to day zero, as a measure of the organic matter contained in the water, which is shown in figures 25A and 25B. PLA biocarriers in all versions show a significant improvement in COD removal with respect to commercial K3. That is, there is a positive effect of the material in terms of organic matter removal. For the PETG biocarriers, there was a significant increase in COD removal of the V2 PETG with respect to K3-HPDE and K3-PETG, indicating that the V2 geometry resulted in a positive effect on organic matter removal.

These water quality measurements confirm that the new V2 design, both PLA and PETG and V1 PLA, allow for improved water quality, with higher turbidity and COD removal, compared to the commercial K3 geometry, thus providing greater efficiency to the water filtration process.

Additionally, water quality was measured in the field, using a 2000 liter purification system, which is comprised of a 1000 liter tank with the filtration & purification device inside (tank 1). A 1000 liter tank for post treatment of the water (tank 2), and a water pump, plus a chlorinator that pumps and chlorinates the water from tank 1 to tank 2. The water sample was taken after 14 hours of treatment, performed with the device according to the present invention. The results are shown in table 2. Table # 2: Water quality measurement results for a water purification system including the water filtration & purification device.

| | **Tank 1** | **Tank 2** | **Analysis method** | **Law 21.075** |
|---|---|---|---|---|
| | **Filtration & Purification device** | **Post Treatment** | | **Urban use** |
| Turbidity (NTU) | 2.7 | 5.5 | *SM 2130 B Ed.23 | 5 |
| DBO₅ (mg O₂/L) | 4 | 13 | NCh2313/5 Of 2005 | 10 |
| Fecal Coliforms (NMP/100ml) | 23 | <2 | NCh2313/23 Of 95 | 10 |
| Suspended Solids (mg/L) | 3 | 4 | NCh2313/2. Of 95 | 10 |
| Free residual chlorine (mg/L) | <0.02 | 6.66 | ISO 7393/2 Of 2017 | 0.5≤X≤2 |

## Claims

1. A device (1) for filtration and purification of wastewater, wherein the device (1) comprising:
• a tank (2) for collecting water to be treated, comprising an inlet or opening (5) for routing the water to be treated and for discharging the water once filtered and purified;
• a biocarrier container (3), placed inside the tank (2), comprising a plurality of biocarriers containing grown microorganisms, which purify the water to be treated;
• an aeration unit configured to supply oxygen inside the tank in order to promote the aerobic metabolism of microorganisms and prevent the appearance of bad odors.

2. The device (1) according to claim 1, wherein the biocarrier container (3) comprises an elongated body (31), made of a water permeable material, with a top end and a bottom end, opposite each other; and connecting means (33) at the bottom end for connection to the aeration unit.

3. The device (1) according to claim 2, wherein the upper end of the biocarrier container (3) comprises fastening means (32)for anchoring or mounting the biocarrier container (3) to the tank (2) such that the biocarriers container (3) is suspendend inside the tank (2) without being in contact with the walls thereof and aligned with its opening (5).

4. The device (1) according to claim 3, wherein the fixing means (32) comprise at least two tie straps (321) at the upper end of the body (31) of the biocarrier container (3); at least two fixing elements (322) comprising a support strap (323) whose ends include quick connectors (324) that attach to a tie strap (321) and to the opening (5) of the tank (2), respectively.

5. The device (1) according to claim 4, wherein the support strap (323) has a fixed length to define a fixed suspension height or variable or adjustable length to modify the position of the biocarrier container (3) inside the tank (2).

6. The device (1) according to claims 4 or 5, wherein the support straps (323) include loops at their ends for attaching quick connectors (324).

7. The device (1) according to claims 4 to 6, wherein the quick connectors (324) are made of a stainless material.

8. The device (1) according to claims 2 to 7, wherein the body (31) of the biocarrier container (3) is a bag made of a porous material fabric.

9. The device (1) according to claim 8, wherein the porous material fabric is manufactured from recycled fabrics or a plant-based material.

10. The device (1) according to claims 2 to 9, wherein the body (31) of the biocarrier container (3) is cylindrical in shape and comprises a ring at each end to maintain its shape.

11. The device (1) according to claim 10, wherein the rings at each end of the body (31) of the biocarrier container (3) are made of planza (polyethylene pipe) or stainless material.

12. The device (1) according to claims 2 to 11, wherein the body (31) of the biocarrier container (3) comprising a closure (311) for accessing to the interior of the body (31) for placing and/or replacing the biocarriers.

13. The device (1) according to claim 1, wherein the aeration unit comprises an air diffusing ring (4), attached to the bottom of the biocarrier container (3); an air hose (6) connected at one end to the air diffusing ring (4), wherein the air hose (6) exits the tank (2) such that the other end is connected to a mini air compressor that injects air into the tank (2) through said air diffusing ring (4).

14. The device (1) according to claim 13, wherein the air diffusing ring (4) comprises a ring-shaped support, coupled to a diffuser hose, circular in shape, from which air microbubbles emerge to supply oxygen into the tank (2) to promote the aerobic metabolism of microorganisms and preventing the appearance of bad odors.

15. The device (1) according to claims 13 or 14, wherein the air diffuser ring (4) is connected to the biocarriers container (3) by connecting means (33) at the lower end of the body (31).

16. The device (1) according to claim 15, wherein the connecting means (33) comprise at least support strips (331), wherein one end of said strips is attached to the lower end of the biocarrier container (3) and the other end is connected to the air diffuser ring (4).

17. The device (1) according to claim 16, wherein the the connecting means (33) is connected to the air diffuser ring (4) using a hook (332) at each end of the support strips (331).

18. The device (1) according to claim 17, wherein said support strips (331) comprise a loop at their ends for positioning the hook (332).

19. The device (1) according to claims 16 or 17, wherein the hooks (332) are made of stainless steel.

20. The device (1) according to claim 15, wherein the the connecting means (33) is connected to the air diffuser ring (4) using cable ties.

21. The device (1) according to claims 13 to 20, wherein a portion of the air hose (6) is fixed to the biocarriers container (3) using at least one transverse pin (34) near the lower part and to the upper part of said biocarrier container (3), such that said portion of the air hose (6) is parallel to the longitudinal axis of the biocarrier container (3).

22. The device (1) according to claims 2 to 12, wherein the opening (5) of the tank (2) comprises at least two mounting hooks (51) for securing the mounting or anchoring of the fixing means (32).

23. The device (1) according to claim 22, wherein the mounting hooks (51) are made of a stainless material.

24. The device (1) according to claims 1 to 23, wherein the tank (2) is cylindrical, being arranged vertically, wherein the opening (5) is in the upper face of the cylinder.

25. The device (1) according to claims 1 to 23, wherein the tank (2) is cylindrical in shape, being arranged horizontally, wherein the opening (5) is at the top of the tank (2) corresponding to the curved surface or body of the cylinder.

26. The device (1) according to claims 1 to 22, wherein the tank (2) further comprising a protection means in the opening (5) to prevent the entry of foreign matter or contaminants.

27. The device (1) according to claim 26, wherein the protection means in the opening (5) is a lid (7).

28. The device (1) according to claims 1 to 27, wherein the plurality of biocarriers comprises:
• a cylindrical outer ring (81);
• a polygonal inner ring (82), concentric with the outer ring (81) and located in the center thereof;
• an intermediate ring (83) between said polygonal inner ring (82) and the outer ring (81), concentric therewith;
• wherein, from each vertex of the polygon of the polygonal inner ring (82) a first curved rib (84) is projected connecting all the rings (81, 82, 83) of the biocarrier, wherein each first rib (84) is further projected outwardly from the outer ring (81) forming vanes (86) around the outer ring (81); and
• between each pair of first ribs (84) a second curved rib (85) which is connected between the outer wall of the intermediate ring (83) and the inner wall of the outer ring (81).

29. The device (1) according to claim 28, wherein the plurality of biocarriers further comprising at least one additional intermediate ring (87) between the intermediate ring (83) and the inner polygonal ring (82).

30. The device (1) according to claim 29, wherein the radius of the intermediate ring (83) and the at least one additional intermediate ring (87) are such that all the rings (81, 82, 83, 87) of the biocarrier are radially separated by the same distance.

31. The device (1) according to claims 28 to 30, wherein the inner polygonal ring (82) is octagonal in shape.

32. The device (1) according to claims 1 to 31, wherein the plurality of biocarriers are manufactured of HDPE, PETG or PLA.

33. The device (1) according to claims 1 to 32, wherein further comprising a prefilter before or at the opening (5) for removing particles and suspended solids in the water to be treated, before ist entry into the tank (2) or after the treatment has been performed, once the water has already been biofiltered.

34. The device (1) according to claims 1 to 33, wherein further comprising connections for routing the water to be treated from its source to the collection tank (2).

35. The device (1) according to claims 1 to 34, wherein further comprising connections for communicate with a post-treatment tank for storing the treated or biofiltered water.

36. The device (1) according to claims 1 to 35, wherein further comprising, at least one water pump for facilitating feeding water to be treated and discharge of purified water to and from the tank (2), respectively.

37. The device (1) according to claims 1 to 36, wherein further comprising a real-time monitoring system, which allows measuring water quality parameters through sensors that are integrated in a centralized circuit and controlling the operation of the device (1).

38. The device (1) according to claim 37, wherein the monitoring system further comprising a timer to generate different aeration cycles (on/off) to control the water purification time.

39. The device (1) according to claims 1 to 38, wherein in that the tank (2) comprises an outlet or discharge separate from the inlet or opening (5) for the extraction of the water once filtered and purified.

40. The device (1) according to claims 1 to 39, wherein the amount of biocarriers in the tank (2) is at least one kilo of biocarriers per 1,000 liters of water to be treated.

41. A biocarrier for the growth of microorganisms for the filtration and purification of wastewater, wherein the biocarrier comprising:
• a cylindrical outer ring (81);
• a polygonal inner ring (82), concentric with the outer ring (81) and located in the center thereof;
• an intermediate ring (83) between said polygonal inner ring (82) and the outer ring (81), concentric therewith;
• wherein, from each vertex of the polygon of the polygonal inner ring (82) a first curved rib (84) is projected, connecting all the rings (81, 82, 83) of the biocarrier, wherein each first rib (84) is further projected outwardly from the outer ring (81) forming vanes (86) around the outer ring (81); and
• between each pair of first ribs (84) a second curved rib (85) which is connected between the outer wall of the intermediate ring (83) and the inner wall of the outer ring (81).

42. The biocarrier according to claim 41, wherein further comprising at least one additional intermediate ring (87) between the intermediate ring (83) and the polygonal inner ring (82).

43. The biocarrier according to claim 42, wherein the radius of the intermediate ring (83) and the at least one additional intermediate ring (87) are such that all the rings (81, 82, 83, 87) of the biocarrier are radially separated by the same distance.

44. The biocarrier according to claims 41 to 43, wherein the inner polygonal ring (82) is octagonal in shape.

45. The biocarrier according to claims 41 to 44, wherein is manufactured from HDPE, PETG or PLA.
